# FASCICULE DE BREVET EUROPEEN

(11) **EP 0 883 506 B1**
(45) Date de publication et mention de la délivrance du brevet: **17.05.2000**
(21) Numéro de dépôt: 97908439.9
(22) Date de dépôt: 04.03.1997
(51) Int. Cl.: B60J 7/06

(54) **NOUVEAU DISPOSITIF D'OUVERTURE DE CONTENEUR MUNI D'UNE B CHE**
NEUE ÖFFNUNGSVORRICHTUNG FÜR EINEN MIT EINER PLANE AUSGERÜSTETEN BEHÄLTER
NOVEL DEVICE FOR OPENING A CONTAINER WITH A SOFT TOP

(30) Priorité: 04.03.1996 BE 9600187
(43) Date de publication de la demande: 16.12.1998
(73) Titulaire: Etes N.V., 3530 Houthalen (BE)
(72) Inventeur: HORVATH, Andras, H-1143 Budapest (HU)
(74) Mandataire: Vandeberg, Marie-Paule L.G.
(86) Numéro de dépôt international: IB9700338
(87) Numéro de publication internationale: WO9732744

(56) Documents cités:
- EP-A- 0 459 879
- DE-C- 534 433
- DE-C- 916 497
- FR-A- 790 277

## Description

La présente invention concerne un dispositif d'ouverture de conteneur muni d'une bâche. Par "conteneurs", on entend ci-dessous les bennes de véhicules de transport, les remorques et semi-remorques, ainsi que les conteneurs indépendants de tout véhicule de transport. Sur chaque conteneur, la bâche peut se trouver soit au niveau du toit, soit sur un ou plusieurs des côtés, ou soit aussi bien au niveau du toit que d'un ou plusieurs côtés.

D'une manière générale, les bâches servent à protéger le contenu des conteneurs contre les intempéries. Elles servent également à éviter que les marchandises, souvent des produits en vrac, ne s'envolent ou ne se dégradent.

Pour charger et décharger un conteneur, il est souvent nécessaire d'en enlever temporairement la bâche. Sans dispositifs adéquats, il s'agit d'un travail laborieux, qui peut difficilement être effectué par une personne seule.

C'est pourquoi on a cherché des moyens pour faciliter l'ouverture et la fermeture de telles bâches, aussi bien des bâches de toit que des bâches de côté.

On connaît par le brevet US-A-3,820,840 un dispositif comportant deux rails montés sur la caisse d'un véhicule de transport bâché, sur lesquels des chariots à roulettes peuvent coulisser. Sur lesdits chariots sont montés des ressorts métalliques, qui, lorsque les chariots sont rapprochés les uns des autres lors de l'ouverture de la bâche, replient celle-ci en accordéon.

Dans le dispositif décrit dans ce brevet, les ressorts sont fixés aux chariots par un pivot, et ils sont attachés à la bâche par des boucles sur les bras des ressorts. Ce dispositif d'une relative complexité, est sensible à la rouille et à la fatigue. En cas d'endommagement, un démontage en usine de la bâche est nécessaire pour effectuer des réparations.

On connaît par FR-A-790277 un dispositif pour le déplacement d'une capote d'un véhicule comporant des bandes de guidage formées de lames métalliques rigides articulées à pivotement autour de pièces spécialement prévues à cet effet. Chaque bande de guidage est également montée à pivotement, par une de ses extrémités, à un chariot.

On connaît également, notamment par les demandes de brevet DE-A-31 37 437 et EP-A-0 069 391, des dispositifs pourvus de ciseaux qui aident à replier la bâche. Ces ciseaux ont comme inconvénient que la bâche peut être pincée entre leurs éléments articulés, ce qui risque de l'endommager. Ici aussi, les réparations éventuelles doivent être effectuées en usine, car la bâche est fixée au côté supérieur des ciseaux.

Les éléments métalliques tels que les ciseaux et les ressorts sont sujets à l'oxydation et à la fatigue.

Un dispositif à bandes souples, tel que décrit dans la demande de brevet EP-A-0 379 821 évite un tel endommagement de la bâche par pinçage. Ce dispositif comprend des arceaux transversaux. Chaque arceau est relié à l'arceau suivant par une bande flexible, en une matière tendant à reprendre élastiquement sa forme initiale lorsqu'elle a été fléchie. Cette bande est contrainte de manière à présenter une forme convexe vers le haut entre les arceaux. La longueur de la bande entre chaque paire d'arceaux successifs est légèrement supérieure à la distance qui sépare ceux-ci dans leur position espacée, qui correspond à la position effective de soutien de la bâche fermant le véhicule. Lorsque les arceaux sont tirés les uns contre les autres, les portions de bandes entre les arceaux sont forcées de se plier vers le haut, entraînant ainsi la bande avec elles, et la forçant à former des plis vers le haut. La bande est disposée suivant l'axe longitudinal du véhicule.

La bande est fixée sur la partie inférieure de chaque arceau et elle s'étend à travers une ferrure incurvée formant tunnel. Cette ferrure incurvée lui impose une forme incurvée convexe vers le haut.

EP-A-0 459 879 décrit un dispositif basé en substance sur le même principe de fonctionnement.

Dans ces deux dispositifs connus, la bande s'étend sur toute la longueur de la bâche, et, en cas d'endommagement, il est difficile de remplacer une partie du dispositif sans démontage complet en usine.

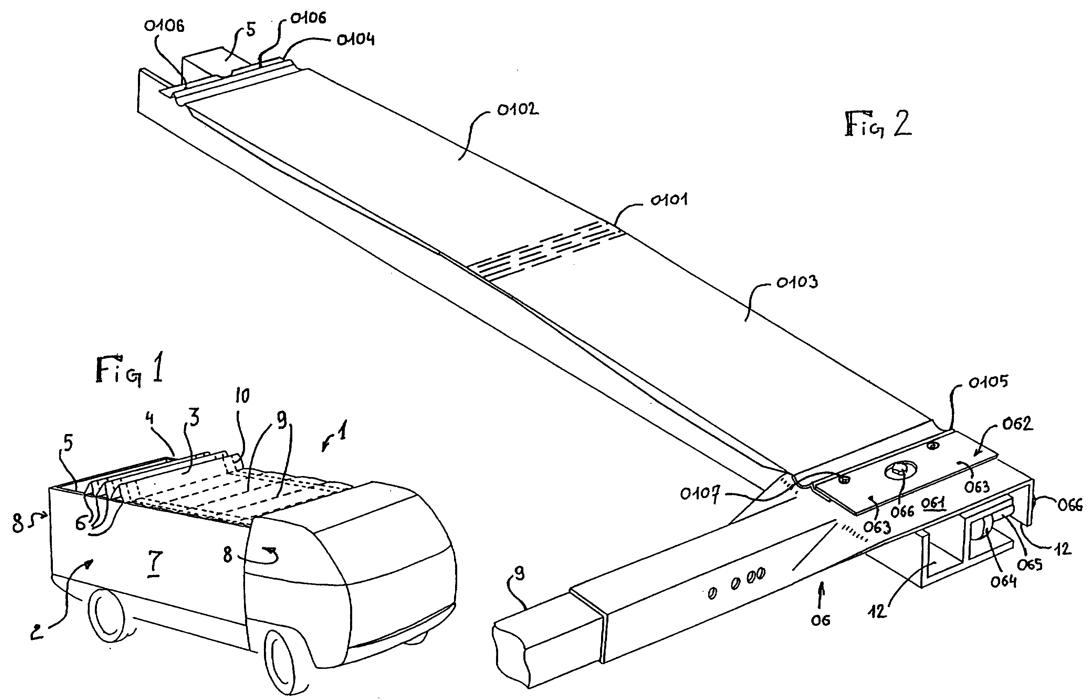

On connaît également un dispositif qui est commercialisé par la société HOECHST AG sous la marque SESAM. Ce dispositif de l'état de la technique est illustré à la figure 2 et commenté plus en détail en référence aux figures 1 et 2. Des chariots métalliques coulissants, reliés entre eux par des barres transversales, et entre lesquels sont fixées des bandes flexibles, sont montés sur des rails s'étendant sur la longueur d'un conteneur. L'ensemble forme une structure de support pour la bâche. Chaque bande flexible comporte une zone centrale mince pliable, apte à adopter une forme cintrée lors de l'ouverture du dispositif, et deux parties latérales plus épaisses terminées par des extrémités libres, fixées chacune par plusieurs rivets entre la face supérieure d'un chariot et une plaque métallique rapportée à ce chariot. Les chariots métalliques se déplacent sur les rails au moyen de roulettes disposées sur des axes eux-mêmes boulonnés à la structure du chariot. La réalisation d'un chariot complet comprend la fabrication de plusieurs pièces séparées, et leur assemblage en plusieurs étapes. De même, l'assemblage des bandes flexibles aux chariots pour le montage du dispositif demande un travail de précision nécessitant un outillage spécialisé et impliquant plusieurs manipulations pour assembler chaque extrémité libre d'une bande flexible au chariot correspondant. Enfin, ce dispositif est également difficile à démonter, et sa réparation nécessite aussi un outillage spécifique. Toute réparation, même mineure, exige un retour à l'usine. En cas de problème en cours de route. un dépannage par le personnel affecté au transport lui-même n'est pas possible.

L'invention a pour but de fournir des dispositifs d'ouverture légers mais néanmoins résistants, faciles à assembler et à démonter, et qui ne présentent pas les inconvénients des dispositifs de l'état de la technique.

L'objet de l'invention est un dispositif d'ouverture de conteneur muni d'une bâche, comportant deux rails disposés parallèlement, au moins deux paires de chariots coulissants, aptes à se déplacer le long desdits rails, ces chariots étant appariés entre eux par une barre transversale, des bandes de guidage pliables s'etendant entre deux chariots consécutifs, comportant deux extrémités libres, dont la face supérieure est tournée vers ladite bâche, ces bandes de guidage étant aptes à guider ladite bâche pour la plier en accordéon lors de son ouverture, et des moyens de fixation, aptes à fixer chaque extrémité libre d'une bande de guidage au chariot coulissant correspondant; dans ce dispositif, les chariots coulissants sont fabriqués en matériau léger moulé, et les moyens de fixation des bandes de guidage sur les chariots coulissants sont tels que la fixation est réalisée par une translation relative, suivant une direction transversale par rapport à l'axe des rails.

Les moyens de fixation des bandes de guidage sur les chariots coulissants comportent généralement des premiers moyens de fixation sur les extrémités libres des bandes de guidage, et des seconds moyens de fixation, sur les chariots.

Les premiers moyens de fixation peuvent faire partie intégrante des bandes de guidage; de même, les seconds moyens de fixation peuvent faire partie intégrante des chariots.

Divers moyens de fixation permettant la fixation par translation relative peuvent être utilisés dans le cadre de l'invention.

De préférence, lesdits moyens de fixation comportent des moyens d'arrêt.

Suivant un mode de réalisation préféré, les moyens de fixation comprennent des coulisses et des coulisseaux de forme correspondante, ces organes étant disposés les uns aux extrémités libres des bandes de guidage, les autres sur la face supérieure des chariots.

Dans ce cas, les coulisses sont avantageusement disposées sur la face supérieure des chariots, lesdites faces supérieures comportant en outre des rebords en corniche s'étendant au-dessus desdites coulisses.

Suivant un autre mode de réalisation, lesdits moyens de fixation comportent des boutonnières en forme de trou de serrure et des boutons de forme correspondante disposés les uns à chaque extrémité libre d'une bande de guidage, les autres à la face supérieure des chariots coulissants.

Lesdits moyens de fixation peuvent également comporter un assemblage en queue d'aronde entre chaque extrémité libre des bandes de guidage, et les faces supérieures de chaque chariot.

Les moyens d'arrêt comportent avantageusement au moins un ergot à encliqueter et au moins une indentation, disposés en regard les uns des autres sur les extrémités libres des bandes de guidage et les faces supérieures des chariots.

De manière préférée, les chariots sont fabriqués en matériau léger moulé par injection, et, sont de préférence, en polyamide renforcé de fibres de verre.

De préférence, les chariots sont réalisés en une seule pièce lors du moulage.

Des roulettes peuvent être fixées au chariot, par exemple par encliquetage.

Suivant un mode de réalisation avantageux, les bandes de guidage comportent deux parties latérales rigides reliées, de façon articulée, par leurs extrémités proximales à une partie centrale au moyen de charnières. Les bandes de guidage peuvent alors aussi comporter des charnières entre les extrémités libres et les parties latérales.

Dans ce mode de réalisation, les dispositifs d'ouverture suivant l'invention doivent supporter des contraintes réduites, et résistent donc mieux à l'usure. Ils permettent d'actionner la bâche même au cas où un poids important se trouve sur celle-ci, et ceci sans risque d'endommagement.

Dans ce cas, les bandes de guidage sont avantageusement en matière plastique moulée par injection et fabriquées d'un seul tenant, et les charnières sont constituées de zones minces.

La bâche est de préférence une bâche de toit; elle peut comporter une partie latérale apte à couvrir au moins partiellement un côté du conteneur. Il peut également s'agir d'une bâche latérale.

L'invention a également pour objet un chariot coulissant pour un dispositif tel que décrit ci-dessus ainsi qu'une bande de guidage pour ce dispositif.

Les dispositifs d'ouverture suivant l'invention sont de conception simple, légers tout en étant solides, et efficaces dans leur fonctionnement.

Ils peuvent être fabriqués selon un procédé simple, rapide et bon marché, incluant peu de main d'oeuvre, et ne nécessitant pas un matériel sophistiqué.

Les dispositifs suivant l'invention sont extrêmement faciles à monter et à démonter.

Ils sont extrêmement résistants et pratiquement incassables. En cas d'accident, une partie du dispositif peut être démontée en un tournemain et remplacée par un homme seul, sans qu'il soit nécessaire de disposer d'un outillage compliqué ni de compétences techniques particulières.

Dans certaines formes d'exécution, les chariots eux-mêmes peuvent être facilement remplacés en cours de trajet.

Les pièces de rechange peuvent être emportées pendant le transport de marchandises. Ces pièces occupent une place limitée et sont très légères. Le cas échéant, elles peuvent être vendues sous forme de kits ultra-plats de dimensions réduites.

Les matériaux utilisés pour les bandes et les chariots sont aisément recyclables.

D'autres particularités et avantages de l'invention seront décrits dans une réalisation particulière, référence étant faite aux dessins annexés dans lesquels
la figure 1 représente d'une manière schématique un conteneur bâché pourvu d'un dispositif d'ouverture, monté sur un véhicule,
la figure 2 représente une vue en perspective d'une bande de guidage et d'un chariot d'un dispositif d'ouverture selon l'état de la technique,
la figure 3 représente une vue en perspective d'une bande de guidage et d'un chariot d'une forme d'exécution préférée d'un dispositif d'ouverture selon l'invention, avec arrachement partiel,
la figure 4 représente une bande de guidage en coupe verticale longitudinale selon la ligne IV-IV de la figure 3,
la figure 5 est une vue en perspective (vue du dessous) d'une bande de guidage telle que montrée à la figure 3,
la figure 6 est une vue en coupe transversale d'un chariot d'un dispositif suivant l'invention, suivant la ligne VI-VI de la figure 3.

La figure 1 est une figure schématique destinée à situer plus particulièrement dans l'espace un dispositif d'ouverture de conteneur, en l'occurrence placé sur un véhicule.

Comme on le voit à la figure 1, le dispositif d'ouverture 1 pour le conteneur 2 muni d'une bâche 3, comporte deux rails 4, 5 longitudinaux, sur lesquels des chariots 6 coulissants peuvent se déplacer. La bâche 3 peut être présente uniquement sur la partie supérieure du conteneur 2 et servir alors de toit, ou bien elle peut également comporter des surfaces latérales (non représentées) couvrant partiellement ou totalement les flancs 7 du conteneur 2. Le cas échéant, elle peut également se prolonger sur l'un et/ou l'autre des petites faces 8 avant ou arrière du conteneur 2.

La bâche 3 est représentée, à la figure 1, en position partiellement ouverte.

Chaque chariot 6 se trouvant sur le rail 4, est apparié par une barre transversale 9 à un autre chariot 6 correspondant (non représenté sur la figure 1) se trouvant sur l'autre rail 5.

Deux chariots 6 consécutifs se trouvant sur le même rail 4 ou 5 sont reliés entre eux par une bande de guidage 10, dont la face supérieure 11 est tournée vers ladite bâche 3.

L'ensemble des bandes de guidage 10 et des chariots 6 permet de manoeuvrer la bâche 3 lors de l'ouverture et de la fermeture du toit.

La bâche 3 étant fixée par des lanières (non représentées) à chaque barre transversale 9 ainsi qu'à la face de bout de chaque chariot 6, un repli s'amorce lorsque les chariots 6 sont rapprochés les uns des autres. Les bandes flexibles 10 imposent à la bâche 3 de se replier de façon correcte.

La figure 2 représente une vue en perspective d'une bande de guidage 010 et d'un chariot 06 d'un dispositif d'ouverture 01 selon une technique antérieure.

Pour éviter toute confusion, les numéros de référence des éléments de ce dispositif selon une technique antérieure sont précédés d'un 0 (zéro) lorsque ces éléments diffèrent d'une manière significative d'éléments correspondants dans le dispositif suivant l'invention.

Des chariots métalliques 06 coulissants, entre lesquels sont fixées des bandes flexibles 010, sont montés sur le rail 5. Chaque bande flexible 010 comporte une zone centrale pliable 0101 de moindre section, apte à adopter une forme cintrée lors de l'ouverture du dispositif 01, et deux parties latérales 0102 et 0103 plus épaisses terminées par des extrémités libres 0104 et 0105 munies d'orifices 106. Sur la figure 2, on a représenté l'extrémité libre 0105 montée entre la face supérieure 061 d'un chariot 06 et une plaque rapportée métallique 062 munie d'orifices 063. Cette extrémité libre 0105 est fixée au chariot 06 au moyen de rivets 0107 passant dans les orifices 0106 et 063 et dans des orifices non visibles sur la figure 2, ménagés à la face supérieure 061 du chariot 06. Le chariot 06 se déplace le long des rainures 12 du rail 5 grâce à trois roulettes 064 (dont une seule est visible sur la figure 2), maintenues chacune sur un axe métallique 065 au moyen d'un boulon 066. Il ressort clairement de la figure 2 que, dans ce dispositif 01 de l'état de la technique, l'assemblage de chaque extrémité libre 0104, 0105 d'une bande de guidage 010 au chariot correspondant 06 est une opération de précision nécessitant beaucoup de manipulations.

Par ailleurs, l'assemblage du chariot 06 lui-même y compris le montage - et éventuellement, le démontage - des roulettes 064 doit se faire avec précision pour assurer un coulissement sans à-coups sur le rail 5.

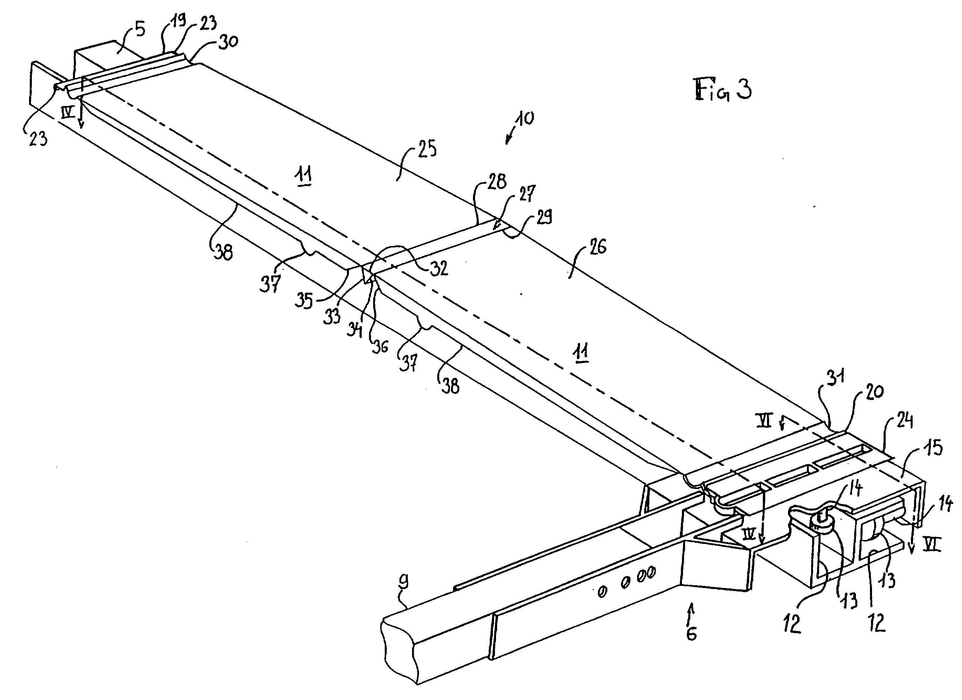

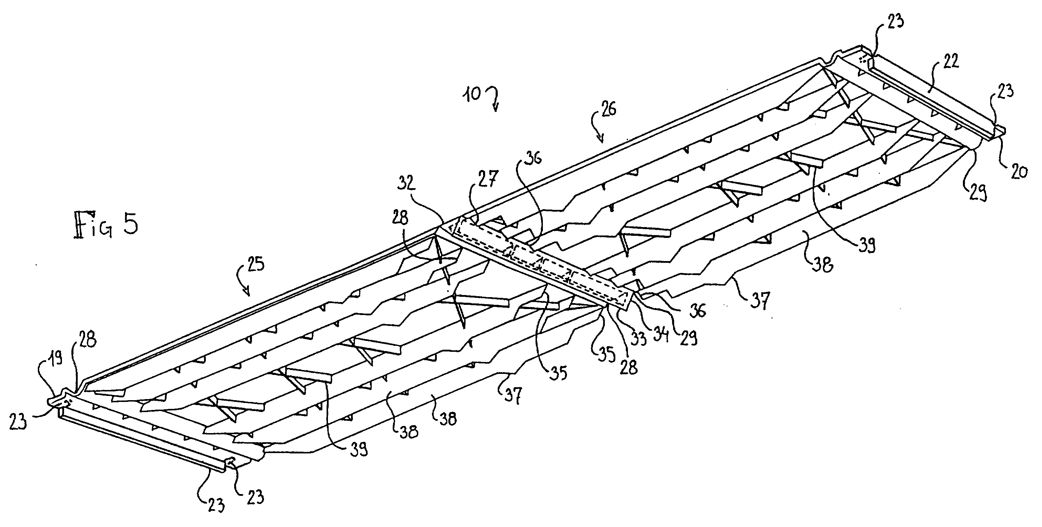

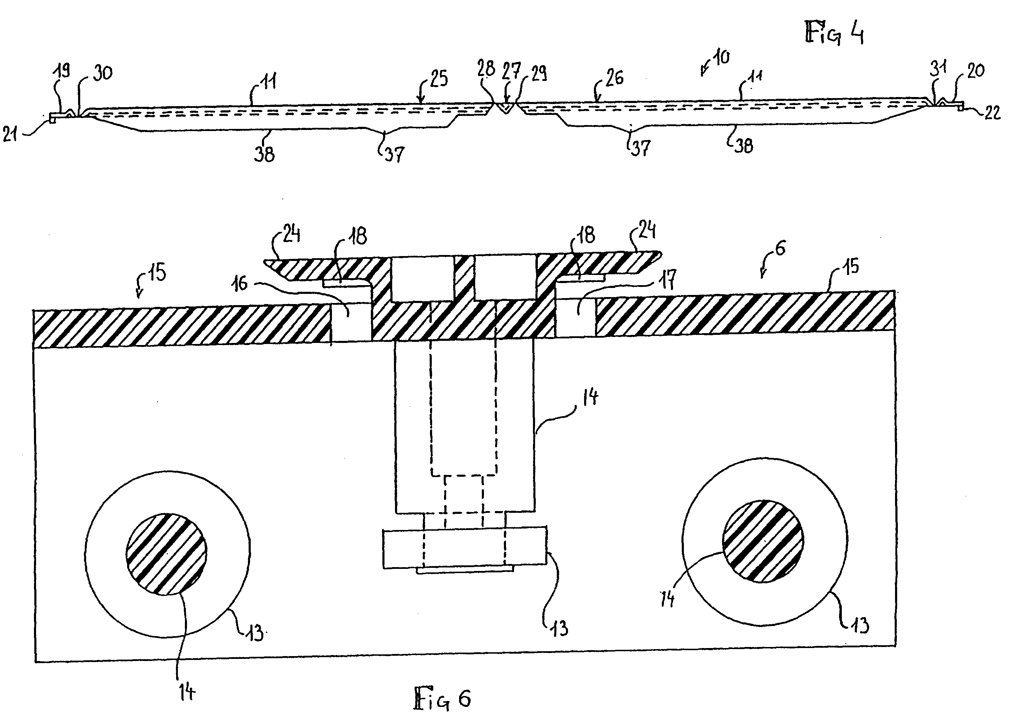

Les figures 3, 4, 5 et 6 représentent en détail une forme d'exécution préférée d'une bande de guidage 10 et d'un chariot 6 d'un dispositif 1 selon l'invention. Aux figures 3 et 4, la bande de guidage 10 est représentée dans la position d'extension maximale qu'elle adopte lorsque la bâche 3 est en position fermée.

Les bandes de guidage 10 du dispositif 1 peuvent être aisément montées sur les chariots 6 et peuvent également être aisément désolidarisées de ceux-ci. Les chariots 6 consistent en des blocs en une seule pièce, en matière plastique moulée par injection et sont illustrés en particulier aux figures 3 et 6.

Ils sont pourvus de trois roulettes 13. Deux d'entre elles sont montées verticalement et la troisième est montée horizontalement par rapport au rail 5. Ces roulettes 13 permettent aux chariots 6 de se déplacer sans à-coups dans les rainures 12 correspondantes du rail 5. Les axes 14 sur lesquels sont montées les roulettes 13 font partie intégrante du chariot 6. Il ne s'agit pas de pièces rapportées comme le sont les axes 065 dans le dispositif 01 de l'état de la technique.

La figure 6 montre plus en détail que le chariot 6 comporte à sa face supérieure 15 deux coulisses 16 et 17 pourvues chacune d'au moins un ergot 18 à encliqueter. Ces coulisses 16 et 17 sont disposées perpendiculairement au rail 5 lorsque le chariot 6 est en place sur celui-ci.

Comme on le voit bien sur les figures 3 et 4, une bande de guidage 10 comporte de façon correspondante, à chacune de ses extrémités libres 19, 20 un coulisseau 21, 22 apte à être engagé dans une des coulisses 16, 17. De cette manière, chaque chariot 6 peut être fixé à deux bandes de guidage 10, et chaque bande de guidage 10 à deux chariots 6.

Pour faciliter le remplacement de pièces endommagées, les bandes 10, tout comme les chariots 6, sont parfaitement symétriques. De la sorte, n'importe lequel des coulisseaux 21 ou 22 peut être glissé indifféremment dans une coulisse 16 ou 17.

L'utilisation du matériau choisi, (par exemple, de la matière plastique renforcée par des fibres - notamment les polyamides renforcés de fibres de verre, ou du métal injectable) permet la conception de chariots 6 de formes complexes comportant notamment les coulisses 16 et 17 obtenues directement lors du moulage de la pièce. On évite ainsi l'usage de moyens de solidarisation mécaniques (tels que par exemple boulons ou rivets) qui rendent quasi-inévitable le recours à un outillage spécifique et le retour en usine du conteneur pour le simple remplacement d'une bande de guidage 10 défectueuse. En fait, la rupture d'une seule bande de guidage 10 peut entraîner un mauvais fonctionnement de tout le dispositif de fermeture.

L'usage de moyens de solidarisation par translation transversale tels que les coulisses 16 et 17 coopérant avec les coulisseaux 21 et 22 permet au contraire une réparation ou un changement de pièces défectueuses in situ.

Si une bande de guidage 10 est endommagée, quelle qu'en soit la raison, il est en effet aisé de la démonter (par une simple translation) et de remettre en place une bande neuve (contenue par exemple dans un kit de réparation peu encombrant) en l'insérant par les coulisseaux 21 ou 22 de ses extrémités libres 19, 20 dans les coulisses 16 ou 17 des chariots 6 correspondants.

La bande de guidage 10, une fois mise en place, est maintenue sans risque de se défaire par les ergots à encliqueter 18 coopérants avec une des indentations 23 ménagées dans chaque extrémité libre 19 et 20.

Les extrémités libres 19 et 20 de chaque bande de guidage 10 sont maintenues sur toute leur longueur par les coulisses 16 et 17 et par des rebords en corniche 24 qui surplombent la face supérieure 15 des chariots 6. Les efforts sont donc répartis de façon bien plus uniforme que lorsque des bandes de guidage sont boulonnées ou rivetées sur des chariots, d'où un moindre risque de tensions localisées et de bris.

Les bandes de guidage 10 peuvent être désolidarisées des chariots 6 coulissants sans outillage spécifique, par simple déboîtement transversal.

Les dispositifs d'ouverture 1 selon l'invention sont simples et légers. En outre, ils sont économiques car, exigeant peu de matière première, ils peuvent être fabriqués en grandes séries à très faible coût unitaire (à performances identiques) et ils demandent peu de travail de montage et de démontage.

Les chariots 6 sortant du moule ne nécessitent plus aucun usinage: les roulettes 13 y sont montées par simple encliquetage.

Les chariots 6 peuvent être montés par boulonnage sur les barres transversales 9 (ce qui permet leur remplacement aisé en cas d'endommagement). L'endommagement d'un chariot 6 étant cependant un événement rare, on peut également fixer directement les chariots 6 dès après leur fabrication directement sur les barres transversales 9.

La fixation de la bâche 3 à chaque chariot 6 peut être réalisée par boulonnage ou à l'aide de vis auto-taraudantes (qui peuvent être comprises dans le kit de remplacement cité plus haut).

On remarquera que la forme des coulisses décrite ici n'est pas limitative, et que l'on peut utiliser d'autres modes de fixation par translation non illustrés, tels que par exemple des profils en queue d'aronde ou des boutonnières en trou de serrure et les ergots correspondants qui peuvent être disposés, au choix, suivant les facilités de montage, soit sur la face supérieure des chariots, soit sur les extrémités libres 19 et 20 des bandes de guidage 10.

Les chariots 6 coulissants sont fabriqués en matière plastique, ou une autre matière légère moulée par injection. Il est en effet important dans le secteur de transport de diminuer la tare pour pouvoir augmenter le poids net, le poids brut maximal qui peut être transporté étant fixé.

Le poids global du dispositif suivant l'invention étant considérablement allégé, son inertie est également réduite; en conséquence, il est beaucoup plus facile à manoeuvrer (même à la main) ce qui permet également d'utiliser des moyens d'actionnement (treuil etc..) plus légers, moins encombrants d'où, également, un gain de poids indirect non négligeable.

La bande de guidage 10 représentée aux figures 3, 4 et 5 comporte, outre ses extrémités libres 19 et 20 plusieurs parties assumant des fonctions distinctes: deux parties latérales rigides 25 et 26 reliées entre elles par une partie centrale 27. Chaque partie latérale s'articule avec la partie centrale 27 par l'intermédiaire d'une charnière 28, 29 . Ces charnières sont formées ici par une mince zone de pliage très localisée, de faible largeur (typiquement de l'ordre de 1 à quelques millimètres) et de faible épaisseur (typiquement entre 0,4 et 2 mm).

De même, les extrémités distales des parties latérales 25, 26 sont reliées aux extrémités libres correspondantes 19 et 20 par des charnières 30 et 31, également formées par une mince zone de pliage localisée.

La bâche 3 est ouverte en rapprochant les chariots 6 les uns vers les autres, par exemple en utilisant un câble de commande (non représenté), en poussant la barre transversale 9 d'une des extrémités du conteneur 2 vers l'autre extrémité, ou d'une quelconque autre manière, par exemple par une activation automatique.

Alors que dans les dispositifs connus de l'état de la technique, l'intervention d'une force exercée vers le bas risque de détériorer le mécanisme et/ou d'engendrer des déchirures de la bâche, l'emploi de bandes de guidage telles que décrites plus particulièrement en référence aux figures 3, 4, 5 fonctionne d'une manière parfaitement satisfaisante dans une telle situation.

Lorsque deux chariots 6 se rapprochent l'un de l'autre lors de la manoeuvre d'ouverture, la partie centrale 27, qui est articulée par rapport aux deux parties latérales 25 et 26, a la possibilité de basculer, tout en se rapprochant d'une des parties latérales, par exemple la partie 25. Ainsi, la bande de guidage 10 se plie en forme de S, la face supérieure 32 de la partie centrale 27 formant un angle avec les faces supérieures 11 de chaque partie latérale 25 et 26.

L'amplitude de ce mouvement est cependant limitée à 90" environ par la présence de flancs 33 et 34 convergents vers le bas disposés de part et d'autre de la partie centrale 27 et d'arrêts correspondants 35 et 36 ménagés à la partie inférieure des extrémités proximales des parties latérales 25 et 26.

La présence de buttes 37 à la partie inférieure de raidisseurs 38 empêche les parties latérales 25 et 26 de s'incliner vers le bas.

Le basculement de la partie centrale 27 défléchit donc une des parties latérales 25, 26 vers le haut, ce qui amorce le pliage correct vers le haut de l'ensemble de la bande de pliage 10.

Le mouvement des chariots 6 sur le rail 5 n'est donc normalement pas entravé.

Des raidisseurs secondaires 39 confèrent à la bande de guidage 10 une excellente tenue au gauchissement.

Dans le cas d'une masse d'eau présente sur un toit de véhicule, celle-ci sera au moins partiellement évacuée lors du mouvement d'ouverture. En effet, l'eau glissera sur la bâche 3 selon un trajet imposé le long des parties latérales 25 et 26 qui se positionnent en oblique. La masse d'eau sera confinée dans les plis de la bâche 3, et au moins une partie sera expulsée vers l'extérieur du conteneur 2.

Lors du mouvement de rapprochement de deux chariots 6, dans des conditions normales, les extrémités libres 19 et 20 ne changent pas d'orientation, tandis que chaque partie latérale 25 et 26 s'incline progressivement suivant un angle compris entre 0° et 90° vers le haut.

Outre les bandes de guidage 10 à partie centrale 27 articulée décrites plus particulièrement en référence aux figures 2, 3, 4, il est parfaitement possible, sans sortir du cadre de l'invention, d'utiliser dans le dispositif d'ouverture des bandes de guidage d'un profil différent, dans la mesure néanmoins où leurs extrémités libres sont pourvues de moyens de solidarisation à translation compatibles avec ceux des chariots.

## Revendications

1. Dispositif d'ouverture (1) de conteneur (2) muni d'une bâche (3), comportant
- deux rails (4, 5), disposés parallèlement,
- au moins deux paires de chariots (6) coulissants, aptes à se déplacer le long desdits rails (4, 5), ces chariots étant (6) appariés entre eux par une barre transversale (9)
- des bandes de guidage (10) flexibles s'étendant entre deux chariots (6) consécutifs, comportant deux extrémités libres (19, 20), dont la face supérieure (11) est tournée vers ladite bâche (3), ces bandes de guidage (10) étant aptes à guider ladite bâche (3) pour la plier en accordéon lors de son ouverture, et
- des moyens de fixation, dont chacun est apte à fixer une extrémité libre (19, 20) d'une bande de guidage (10) au chariot (6) coulissant correspondant,
caractérisé en ce que
- les chariots (6) coulissants sont fabriqués en matériau léger moulé
- les moyens de fixation des bandes de guidage (10) sur les chariots coulissants (6) sont tels que la fixation est réalisée par une translation relative, suivant une direction transversale par rapport à l'axe des rails (4, 5).

2. Dispositif d'ouverture (1) suivant la revendication 1 caractérisé en ce que lesdits moyens de fixation comportent en outre des moyens d'arrêt (18, 23).

3. Dispositif d'ouverture (1) suivant l'une quelconque des revendications précédentes, caractérisé en ce que les moyens de fixation comprennent des coulisses (16, 17) et des coulisseaux (21, 22) de forme correspondante, ces organes étant disposés les uns aux extrémités libres (19, 20) des bandes de guidage (10), les autres sur la face supérieure (15) des chariots (6) .

4. Dispositif d'ouverture (1) suivant la revendication 3, caractérisé en ce que les coulisses (16, 17) sont disposées sur la face supérieure (15) des chariots (6), lesdites faces supérieures (15) comportant en outre des rebords en corniche (24) s'étendant au-dessus desdites coulisses (16, 17).

5. Dispositif d'ouverture (1) suivant l'une quelconque des revendications 1 et 2, caractérisé en ce que lesdits moyens de fixation comportent des boutonnières en forme de trou de serrure et des boutons de forme correspondante disposés les uns à chaque extrémité libre (19, 20) d'une bande de guidage (10), les autres à la face supérieure (15) des chariots (6) coulissants.

6. Dispositif d'ouverture (1) suivant l'une quelconque des revendications 1 et 2, caractérisé en ce que lesdits moyens de fixation comportent un assemblage en queue d'aronde entre chaque extrémité libre (19, 20) des bandes de guidage (10), et les faces supérieures (15) de chaque chariot (6).

7. Dispositif d'ouverture (1) suivant l'une quelconque des revendications 2 à 6, caractérisé en ce que les moyens d'arrêt comportent au moins un ergot à encliqueter (18) et au moins une indentation (23) disposés en regard les uns des autres sur les extrémités libres (19, 20) des bandes de guidage (10) et les faces supérieures (15) des chariots (6).

8. Dispositif d'ouverture (1) selon l'une quelconque des revendications précédentes, caractérisé en ce que la bâche (3) est une bâche de toit.

9. Dispositif d'ouverture (1) selon la revendication 8, caractérisé en ce que la bâche (3) comporte une partie latérale apte à couvrir au moins partiellement un côté du conteneur (2).

10. Dispositif d'ouverture (1) selon l'une quelconque des revendications 1 à 7, caractérisé en ce que la bâche (3) est une bâche latérale.

11. Chariot coulissant (6) pour un dispositif d'ouverture (1) selon l'une des revendications 1 à 10 le dit chariot (6) étant caractérisé en ce qu'il est fabriqué en matériau léger moulé, les moyens de fixation des bandes de guidage (10) sur les chariots coulissants (6) étant tels que la fixation est réalisée par une translation relative, suivant une direction transversale par rapport à l'axe des rails (4, 5).

12. Chariot (6) suivant la revendication 11 caractérisé en ce que lesdits moyens de fixation comportent en outre des moyens d'arrêt (18) pour coopérer avec moyens d'arrêt d'une bande de guidage (23).

13. Chariot (6) suivant l'une quelconque des revendications 11 et 12, caractérisé en ce que les moyens de fixation du chariot (6) sur les bandes de guidage comprennent des coulisses (16, 17) pour coopérer avec des coulisseaux (21, 22) de forme correspondante, ces organes étant disposés les uns aux extrémités libres (19, 20) des bandes de guidage, les autres sur la face supérieure (15) des chariots (6).

14. Chariot (6) suivant la revendication 13, caractérisé en ce que les coulisses (16, 17) sont disposées sur la face supérieure (15) du chariot (6), lesdites face supérieure (15) comportant en outre des rebords en corniche (24) s'étendant au-dessus desdites coulisses (16, 17).

15. Chariot (6) suivant l'une quelconque des revendications 11 et 12, caractérisé en ce que lesdits moyens de fixation du chariot (6) sur les bandes de guidage comportent des boutonnières en forme de trou de serrure, les uns étant disposés à chaque extrémité libre (19, 20) des bandes de guidage, les autres sur la face supérieure (15) du chariot (6) pour coopérer avec des boutons de forme correspondante.

16. Chariot (6) suivant l'une quelconque des revendications 11 et 12, caractérisé en ce que lesdits moyens de fixation comportent un assemblage en queue d'aronde entre chaque extrémité libre (19, 20) des bande de guidage (10), et les faces supérieures (15) de chaque chariot (6).

17. Chariot (6) suivant l'une quelconque des revendications 13 à 16, caractérisé en ce que les moyens d'arrêt du chariot sur les bandes de guidage comprennent au moins un ergot à encliqueter (18) pour coopérer avec au moins une indentation (23) disposés en regard les uns des autres sur une extrémité libre (19, 20) des bandes de guidage (10) et les faces supérieures (15) des chariots (6)
- au moins un ergot à encliqueter (18) pour coopérer avec au moins une indentation (23).

18. Chariot (6) selon l'une quelconque des revendications 11 à 17, caractérisé en ce qu'il est fabriqué en matériau léger moulé par injection.

19. Chariot (6) suivant la revendication 18, caractérisé en ce qu'il est réalisé en polyamide renforcé de fibres de verre.

20. Chariot (6) suivant l'une quelconque des revendications 11 à 19, caractérisé en ce que des roulettes (13) sont fixées au chariot (6) par encliquetage.

21. Bande de guidage pour un dispositif d'ouverture (1) selon l'une des revendications 1 à 10 la dite bande de guidage étant caractérisée en ce que ses moyens de fixation sur les chariots coulissants (6) sont tels que la fixation est réalisée par une translation relative, suivant une direction transversale par rapport à l'axe des rails (4, 5).

22. Bande de guidage (10) suivant la revendication 21 caractérisée en ce que lesdits moyens de fixation comportent en outre des moyens d'arrêt (23) pour coopérer avec moyens d'arrêt d'un chariot (18).

23. Bande de guidage (10) suivant l'une quelconque des revendications 21 et 22, caractérisée en ce que les moyens de fixation comprennent des coulisses (16, 17) et des coulisseaux (21, 22) de forme correspondante, ces organes étant disposés les uns aux extrémités libres (19, 20) des bandes de guidage, les autres sur les faces supérieures (15) des chariots (6).

24. Bande de guidage (10)) suivant l'une quelconque des revendications 21 et 22, caractérisée en ce que lesdits moyens de fixation comportent des boutonnières en forme de trou de serrure pour coopérer avec des boutons de forme correspondante les boutonnières et les boutons étant disposés les uns à chaque extrémité libre (19, 20) d'une bande de guidage, les autres à la face supérieure (15) des chariots coulissants (6).

25. Bande de guidage (10) suivant l'une quelconque des revendications 21 et 22, caractérisée en ce que lesdits moyens de fixation comportent un assemblage en queue d'aronde entre chaque extrémité libre (19, 20) des bandes de guidage (10) et les faces supérieures (15) de chaque chariot (6).

26. Bande de guidage (10) suivant l'une quelconque des revendications 22 à 25, caractérisée en ce que les moyens d'arrêt comprennent au moins un ergot à encliqueter (18) et au moins une indentation (23) disposés en regard les uns des autres sur les extrémités libres (19, 20) des bandes de guidage (10) et les faces supérieures (15) des chariots (6).

## Patentansprüche

1. Öffnungsvorrichtung (1) für Container (2) mit einer Plane (3), die folgendes umfaßt:
- zwei parallel angeordnete Schienen (4, 5);
- mindestens zwei Paar verschiebbare Schlitten (6), die sich entlang der genannten Schienen (4, 5) bewegen können, wobei diese Schlitten (6) untereinander paarweise mit einer Querstange (9) verbunden sind;
- flexible Führungsbänder (10), die zwischen zwei aufeinanderfolgenden Schlitten (6) verlaufen und zwei freie Enden (19, 20) besitzen, deren Oberseite (11) der genannten Plane (3) zugewandt ist, wobei diese Führungsbänder (10) die genannte Plane (3) führen können, um sie bei ihrer Öffnung in Ziehharmonikafalten zu legen, und
- Befestigungsmittel, von denen ein jedes ein freies Ende (19, 20) eines Führungsbandes (10) am entsprechenden verschiebbaren Schlitten (6) befestigen kann;
dadurch gekennzeichnet, daß
- die verschiebbaren Schlitten (6) aus einem leichten Gußwerkstoff gefertigt sind;
- die Befestigungsmittel der Führungsbänder (10) an den verschiebbaren Schlitten (6) so beschaffen sind, daß die Befestigung durch eine relative Translationsbewegung in Querrichtung zur Achse der Schienen (4, 5) erfolgt.

2. Öffnungsvorrichtung (1) gemäß Anspruch 1, dadurch gekennzeichnet, daß die genannten Befestigungsmittel außerdem Arretierungsmittel (18, 23) umfassen.

3. Öffnungsvorrichtung (1) gemäß einem der vorstehenden Ansprüche, dadurch gekennzeichnet, daß die Befestigungsmittel Gleitführungen (16, 17) und Gleitstücke (21, 22) entsprechender Form umfassen, wobei die einen dieser Organe an den freien Enden (19, 20) der Führungsbänder (10) und die anderen auf der Oberseite (15) der Schlitten (6) angeordnet sind.

4. Öffnungsvorrichtung (1) gemäß Anspruch 3, dadurch gekennzeichnet, daß die Gleitführungen (16, 17) auf der Oberseite (15) der Schlitten (6) angeordnet sind, wobei diese genannten Oberseiten (15) außerdem Simskanten (24) umfassen, die über den genannten Gleitführungen (16, 17) verlaufen.

5. Öffnungsvorrichtung (1) gemäß einem der Ansprüche 1 und 2, dadurch gekennzeichnet, daß die genannten Befestigungsmittel Knopflöcher in Schlüssellochform und Knöpfe entsprechender Form umfassen, wobei die einen an jedem freien Ende (19, 20) eines Führungsbandes (10) und die anderen auf der Oberseite (15) der verschiebbaren Schlitten (6) angebracht sind.

6. Öffnungsvorrichtung (1) gemäß einem der Ansprüche 1 und 2, dadurch gekennzeichnet, daß die genannten Befestigungsmittel eine Schwalbenschwanzverbindung zwischen jedem freien Ende (19, 20) der Führungsbänder (10) und den Oberseiten (15) jedes Schlittens (6) umfassen.

7. Öffnungsvorrichtung (1) gemäß einem der Ansprüche 2 bis 6, dadurch gekennzeichnet, daß die Arretierungsmittel mindestens einen Einrastnocken (18) und mindestens eine Auszahnung (23) umfassen, die einander gegenüber an den freien Enden (19, 20) der Führungsbänder (10) und den Oberseiten (15) der Schlitten (6) angeordnet sind.

8. Öffnungsvorrichtung (1) gemäß einem der vorstehenden Ansprüche, dadurch gekennzeichnet, daß die Plane (3) eine Dachplane ist.

9. Öffnungsvorrichtung (1) gemäß Anspruch 8, dadurch gekennzeichnet, daß die Plane (3) ein Seitenteil umfaßt, das mindestens teilweise eine Seite des Containers (2) abdecken kann.

10. Öffnungsvorrichtung (1) gemäß einem der Ansprüche 1 bis 7, dadurch gekennzeichnet, daß die Plane (3) eine Seitenplane ist.

11. Verschiebbarer Schlitten (6) für eine Öffnungsvorrichtung (1) gemäß einem der Ansprüche 1 bis 10, wobei der genannte Schlitten (6) dadurch gekennzeichnet ist, daß er aus einem leichten Gußwerkstoff hergestellt ist, wobei die Befestigungsmittel der Führungsbänder (10) an den verschiebbaren Schlitten (6) so beschaffen sind, daß die Befestigung durch eine relative Translationsbewegung in Querrichtung zur Achse der Schienen (4, 5) erfolgt.

12. Schlitten (6) gemäß Anspruch 11, dadurch gekennzeichnet, daß die genannten Befestigungsmittel außerdem Arretierungsmittel (18) zum Zusammenwirken mit Arretierungsmitteln eines Führungsbandes (23) umfassen.

13. Schlitten (6) gemäß einem der Ansprüche 11 und 12, dadurch gekennzeichnet, daß die Befestigungsmittel des Schlittens (6) an den Führungsbändern folgendes umfassen: Gleitbahnen (16, 17) zum Zusammenwirken mit Gleitstücken (21, 22) von entsprechender Form, wobei die einen dieser Organe an den freien Enden (19, 20) der Führungsbänder und die anderen auf der Oberseite (15) des Schlittens (6) angeordnet sind.

14. Schlitten (6) gemäß Anspruch 13, dadurch gekennzeichnet, daß die Gleitbahnen (16, 17) auf der Oberseite (15) des Schlittens (6) angeordnet sind, wobei die genannte Oberseite (15) außerdem Simskanten (24) umfaßt, die über den genannten Gleitbahnen (16, 17) verlaufen.

15. Schlitten (6) gemäß einem der Ansprüche 11 und 12, dadurch gekennzeichnet, daß die genannten Befestigungsmittel des Schlittens (6) an den Führungsbändern folgendes umfassen: Knopflöcher in Schlüssellochform, wobei die einen an jedem freien Ende (19, 20) der Führungsbänder und die anderen auf der Oberseite (15) des Schlittens (6) angeordnet sind, zum Zusammenwirken mit Knöpfen entsprechender Form.

16. Schlitten (6) gemäß einem der Ansprüche 11 und 12, dadurch gekennzeichnet, daß die genannten Befestigungsmittel eine Schwalbenschwanzverbindung zwischen jedem freien Ende (19, 20) der Führungsbänder (10) und den Oberseiten (15) jedes Schlittens (6) umfassen.

17. Schlitten (6) gemäß einem der Ansprüche 13 bis 16, dadurch gekennzeichnet, daß die Arretierungsmittel des Schlittens an den Führungsbändern mindestens einen Einrastnocken (18) zum Zusammenwirken mit mindestens einer Auszahnung (23) umfassen, die einander gegenüber an einem freien Ende (19, 20) der Führungsbänder (10) und auf den Oberseiten (15) der Schlitten (6) angeordnet sind.

18. Schlitten (6) gemäß einem der Ansprüche 11 bis 17, dadurch gekennzeichnet, daß er aus einem leichten Spritzgußmaterial gefertigt ist.

19. Schlitten (6) gemäß Anspruch 18, dadurch gekennzeichnet, daß er aus glasfaserverstärktem Polyamid gefertigt ist.

20. Schlitten (6) gemäß einem der Ansprüche 11 bis 19, dadurch gekennzeichnet, daß Rollen (13) durch Einrasten am Schlitten (6) befestigt sind.

21. Führungsband für eine Öffnungsvorrichtung (1) gemäß einem der Ansprüche 1 bis 10, wobei das genannte Führungsband dadurch gekennzeichnet ist, daß seine Befestigungsmittel an den verschiebbaren Schlitten (6) so beschaffen sind, daß die Befestigung durch eine relative Translationsbewegung in Querrichtung zur Achse der Schienen (4, 5) erfolgt.

22. Führungsband (10) gemäß Anspruch 21, dadurch gekennzeichnet, daß die genannten Befestigungsmittel außerdem Arretierungsmittel (23) zum Zusammenwirken mit Arretierungsmitteln eines Schlittens (18) umfassen.

23. Führungsband (10) gemäß einem der Ansprüche 21 und 22, dadurch gekennzeichnet, daß die Befestigungsmittel Gleitbahnen (16, 17) und Gleitstücke (21, 22) entsprechender Form umfassen, wobei die einen dieser Organe an den freien Enden (19, 20) der Führungsbänder und die anderen auf den Oberseiten (15) der Schlitten (6) angeordnet sind.

24. Führungsband (10) gemäß einem der Ansprüche 21 und 22, dadurch gekennzeichnet, daß die genannten Befestigungsmittel Knopflöcher in Schlüssellochform zum Zusammenwirken mit Knöpfen entsprechender Form umfassen, wobei von den Knopflöchern und Knöpfen die einen an jedem freien Ende (19, 20) eines Führungsbandes und die anderen auf der Oberseite (15) der verschiebbaren Schlitten (6) angeordnet sind.

25. Führungsband (10) gemäß einem der Ansprüche 21 und 22, dadurch gekennzeichnet, daß die genannten Befestigungsmittel eine Schwalbenschwanzverbindung zwischen jedem freien Ende (19, 20) der Führungsbänder (10) und den Oberseiten (15) jedes Schlittens (6) umfassen.

26. Führungsband (10) gemäß einem der Ansprüche 22 bis 25, dadurch gekennzeichnet, daß die Arretierungsmittel mindestens einen Einrastnocken (18) und mindestens eine Auszahnung (23) umfassen, die einander gegenüber an den freien Enden (19, 20) der Führungsbänder (10) und den Oberseiten (15) der Schlitten (6) angeordnet sind.

## Claims

1. Opening device (1) for a container (2) furnished with a tarpaulin (3), including
- two rails (4, 5) arranged in parallel,
- at least two pairs of sliding carriages (6) able to move along the said rails (4, 5), these carriages (6) being joined to one another by means of a transverse bar (9),
- flexible guide bands (10) extending between two consecutive carriages (6) and comprising two free ends (19, 20), the upper face (11) of which is turned towards the said tarpaulin (3), these guide bands (10) being able to guide the said tarpaulin (3) so as to fold it concertina-fashion during the opening thereof, and
- fixing means, each of which is able to fix a free end (19, 20) of a guide band (10) to the corresponding sliding carriage (6),
characterized in that
- the sliding carriages (6) are manufactured from a lightweight moulded material,
- the means for fixing the guide bands (10) to the sliding carriages (6) are such that fixing is carried out as a result of a relative translational movement in a transverse direction relative to the axis of the rails (4, 5).

2. Opening device (1) according to Claim 1, characterized in that the said fixing means further comprise stop means (18, 23).

3. Opening device (1) according to either one of the preceding claims, characterized in that the fixing means comprise slideways (16, 17) and slides (21, 22) of corresponding shape, these members being arranged, in the one case, at the free ends (19, 20) of the guide bands (10) and, in the other case, on the upper face (15) of the carriages (6).

4. Opening device (1) according to Claim 3, characterized in that the slideways (16, 17) are arranged on the upper face (15) of the carriages (6), the said upper faces (15) further comprising cornice mouldings (24) extending above the said slideways (16, 17).

5. Opening device (1) according to either one of Claims 1 and 2, characterized in that the said fixing means comprise keyhole-shaped stud holes and studs of corresponding shape, which are arranged, in the one case, at each free end (19, 20) of a guide band (10) and, in the other case, on the upper face (15) of the sliding carriages (6).

6. Opening device (1) according to either one of Claims 1 and 2, characterized in that the said fixing means comprise a dovetail junction between each free end (19, 20) of the guide bands (10) and the upper faces (15) of each carriage (6).

7. Opening device (1) according to any one of Claims 2 to 6, characterized in that the stop means comprise at least one snap-in catch (18) and at least one indentation (23) which are arranged opposite one another on the free ends (19, 20) of the guide bands (10) and the upper faces (15) of the carriages (6).

8. Opening device (1) according to any one of the preceding claims, characterized in that the tarpaulin (3) is a roof tarpaulin.

9. Opening device (1) according to Claim 8, characterized in that the tarpaulin (3) comprises a lateral part able to cover one side of the container (2) at least partially.

10. Opening device (1) according to any one of Claims 1 to 7, characterized in that the tarpaulin (3) is a lateral tarpaulin.

11. Sliding carriage (6) for an opening device (1) according to any one of Claims 1 to 10, the said carriage (6) being characterized in that it is manufactured from lightweight moulded material, the means for fixing the guide bands (10) to the sliding carriages (6) being such that fixing is carried out as a result of a relative translational movement in a transverse direction relative to the axis of the rails (4, 5).

12. Carriage (6) according to Claim 11, characterized in that the said fixing means further comprise stop means (18) for cooperating with stop means of a guide band (23).

13. Carriage (6) according to either one of Claims 11 and 12, characterized in that the means for fixing the carriage (6) to the guide bands comprise slideways (16, 17) for cooperating with slides (21, 22) of corresponding shape, these members being arranged, in the one case, at the free ends (19, 20) of the guide bands and, in the other case, on the upper face (15) of the carriages (6).

14. Carriage (6) according to Claim 13, characterized in that the slideways (16, 17) are arranged on the upper face (15) of the carriage (6), the said upper face (15) further comprising cornice mouldings (24) extending above the said slideways (16, 17).

15. Carriage (6) according to either one of Claims 11 and 12, characterized in that the said means for fixing the carriage (6) to the guide bands comprise keyhole-shaped stud holes for cooperating with studs of corresponding shape, which are arranged, in the one case, at each free end (19, 20) of the guide bands and, in the other case, on the upper face (15) of the carriage (6).

16. Carriage (6) according to either one of Claims 11 and 12, characterized in that the said fixing means comprise a dovetail junction between each free end (19, 20) of the guide bands (10), and the upper faces (15) of each carriage (6).

17. Carriage (6) according to any one of Claims 13 to 16, characterized in that the stop means of the carriage on the guide bands comprise at least one snap-in catch (18) for cooperating with at least one indentation (23), and are arranged opposite one another on a free end (19, 20) of the guide bands (10) and the upper faces (15) of the carriages (6).

18. Carriage (6) according to any one of Claims 11 to 17, characterized in that it is manufactured from lightweight injection-moulded material.

19. Carriage (6) according to Claim 18, characterized in that it is produced from polyamide reinforced with glass fibres.

20. Carriage (6) according to any one of Claims 11 to 19, characterized in that castors (13) are fixed to the carriage (6) by being snapped in.

21. Guide band for an opening device (1) according to one of Claims 1 to 10, the said guide band being characterized in that the means for fixing it to the sliding carriages (6) are such that fixing is carried out as a result of a relative translational movement in a transverse direction relative to the axis of the rails (4, 5).

22. Guide band (10) according to Claim 21, characterized in that the said fixing means further comprise stop means (23) for cooperating with stop means of a carriage (18).

23. Guide band (10) according to either one of Claims 21 and 22, characterized in that the fixing means comprise slideways (16, 17) and slides (21, 22) of corresponding shape, these members being arranged, in the one case, at the free ends (19, 20) of the guide bands and, in the other case, on the upper faces (15) of the carriages (6).

24. Guide band (10) according to either one of Claims 21 and 22, characterized in that the said fixing means comprise keyhole-shaped stud holes for cooperating with studs of corresponding shape, the stud holes and studs being arranged, in the one case, at each free end (19, 20) of a guide band and, in the other case, on the upper face (15) of the sliding carriages (6).

25. Guide band (10) according to either one of Claims 21 and 22, characterized in that the said fixing means comprise a dovetail junction between each free end (19, 20) of the guide bands (10) and the upper faces (15) of each carriage (6).

26. Guide band (10) according to any one of Claims 22 to 25, characterized in that the stop means comprise at least one snap-in catch (18) and at least one indentation (23), which are arranged opposite one another on the free ends (19, 20) of the guide bands (10) and the upper faces (15) of the carriages (6).
